# EUROPEAN PATENT SPECIFICATION

(11) **EP 3 188 296 B1**
(45) Date of publication and mention of the grant of the patent: **12.02.2020**
(21) Application number: 16207072.6
(22) Date of filing: 28.12.2016
(51) Int. Cl.: H01M 8/0656, C25B 1/04, H01M 8/083, H01M 16/00, H01M 8/04276, H01M 8/0444, H01M 8/04791

(54) **ADJUSTMENT METHOD OF THE ELECTROLYTE COMPOSITION FOR A FUEL CELL SYSTEM**
EINSTELLUNGSMETHODE DER ELEKTROLYTZUSAMMENSETZUNG FÜR EIN BRENNSTOFFZELLENSYSTEM
PROCÉDÉ D'ADAPTATION DE LA COMPOSITION D'UN ÉLECTROLYTE POUR UN SYSTÈME DE PILE À COMBUSTIBLE

(30) Priority: 30.12.2015 IT UB20159752
(43) Date of publication of application: 05.07.2017
(73) Proprietor: Electro Power Systems Manufacturing S.r.L., 20129 Milano (IT)
(72) Inventor: SOLERA, Ludovica, I - 10064 Pinerolo (Torino) (IT); MICUCCI, Stefano, I - 10040 Villar Dora (Torino) (IT); CANTONE, Lorenzo, I - 10139 Torino (IT); NOVO, Emiliano, I - 14017 Valfenera (Asti) (IT)
(74) Representative: Lunati & Mazzoni S.r.L.

(56) References cited:
- WO-A2-2014/174301
- DE-A1-102007 027 720
- US-A1- 2011 243 823

## Description

The object of the present invention is an adjustment procedure of the composition of an electrolyte in a system comprising a fuel cell of the type specified in the preamble of the first claim.

Fuel cells are currently known. They are used for the manufacture and storage of electricity from chemical reactions of hydrogen, arranged in suitable tanks, binding with oxygen, which is also arranged in suitable tanks or present in the environment, to provide water molecules and obtain electricity from the reaction.

A particular system comprising a fuel cell is described in patent application EP-A-2 529 440 of the same applicant. This system also comprises, in addition to the fuel cell, an electrolysing system, wherein an electrolyser separates water into hydrogen and oxygen, which are then stored in separate tanks. The said hydrogen and oxygen stored in separate tanks may subsequently generate water and electricity in the fuel cell itself. In this case, the system comprising the fuel cells and the electrolyser is able to handle the peaks and shortages of the electricity supply, for example caused by a non-homogeneous network provisioning or by energy sources subject to input power variations, such as wind and solar energy, so as to optimise the electricity supply based on the demand.

Said systems comprising fuel cells use electrolytes, both for the electrolysing reactions and for the generation of electricity and water.

The electrolytes, for example, can consist of an aqueous solution having, as already mentioned, water as a solvent and a solute, for example of the alkaline type, which increases the electrical conductivity thereof, such as sodium hydroxide or potassium hydroxide.

In the electrolysing reactions, the electrolyte inside the electrolyser comprises water which is consumed in the hydrolysis reaction for the production of hydrogen and oxygen and is replenished on a periodical or continuous basis. The replenishment of the substances involved in the hydrolysis reaction is a feature present in all systems and for example described in US-A-2011/243823.

At the same time, the oxygen and hydrogen, as they are produced, are sent to two storage tanks.

Instead, in reactions for the production of electricity and water in fuel cells of the alkaline type, the electrolyte impregnates a porous matrix that carries out the separation between the anode and the cathode inside the fuel cell. This electrolyte can be, for instance, an alkaline aqueous solution comprising for example 30% potassium hydroxide.

In all cases, the electrolyte must maintain a predetermined optimum range of electrical conductivity corresponding to a predetermined range of dissolved solute in order to ensure the efficiency of the process.

The described prior art has a few major drawbacks.

In fact, due to secondary phenomena, the conductivity of the electrolyte varies over time during the implementation of the described processes.

In particular, in the electrolysers, the solute of the electrolyte is accidentally partly transported to the storage tanks of hydrogen and oxygen because dragged by the latter.

In the fuel cells, other unwanted events, such as poisoning by carbon dioxide, which causes precipitation of potassium carbonate (K₂CO₃), can reduce or otherwise vary the concentration of the solute in the electrolyser.

Over the years, various devices and systems have been devised in order to remedy the variation in the concentration of the solute in the solutions. In particular, these devices are based on the measurement of the alkalinity of the electrolyte and the possible replenishment, or dilution, of the solute inside the same.

However, these devices have not reached the desired results, in particular because of a continuous, not always predictable, variation in the alkalinity of the solution, and thus, in the concentration of the solute.

In addition, for electrolytic solutions, the containment and transport of solutes in the liquid state is very problematic, since they are very corrosive.

In this context, the technical task underlying the present invention is to devise a procedure for adjusting the composition of an electrolyte in a system comprising a fuel cell, which is capable of substantially obviating the above-mentioned drawbacks.

Within the scope of said technical task, an important object of the invention is to obtain a procedure for adjusting the composition of an electrolyte in a system comprising a fuel cell, which operates with precision.

Another important object of the invention is to provide a procedure for adjusting the composition of an electrolyte in a system comprising a fuel cell, which is both simple and inexpensive, and does not require the use of materials having a high chemical resistance.

The technical task and the objects specified are achieved by means of a procedure for adjusting the composition of an electrolyte in a system comprising a fuel cell as claimed in the appended independent claims.

Preferred embodiments are set forth in the dependent claims.

The features and advantages of the invention will be apparent from the detailed description of preferred embodiments of the invention, with reference to the accompanying drawings, in which:

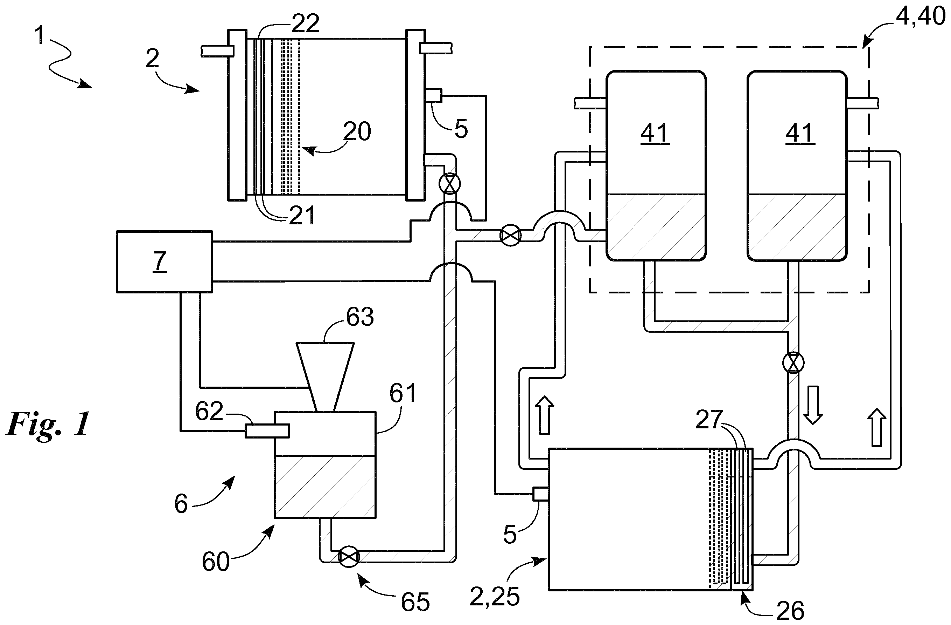

**Fig. 1** schematically shows the system according to the invention.

In the present document, the measures, values, shapes and geometric references (such as perpendicularity and parallelism), when associated with terms such as "about" or with other similar terms such as "almost" or "substantially", are to be understood as contemplating the possibility of measurement errors or inaccuracies due to production and/or manufacturing defects and, especially, contemplating the possibility of a slight difference in the value, measure, shape or geometric reference with which it is associated. For example, these terms, if associated with a value, preferably indicate a difference of not more than 10% of the value itself. Furthermore, when used, terms such as "first", "second", "higher", "lower", "main" and "secondary" do not necessarily identify an order, a priority relationship or a relative position, but can simply be used to distinguish more clearly the different components from each other.

With reference to the Figures, the system according to the invention is indicated as a whole by the numeral **1.**

As described hereinafter, it comprises an electrolyte and means for replenishing the electrolyte present in said system.

The term electrolyte is intended to mean a solution in which the solvent is distilled water and the solute is a solid substance under standard conditions and of the alkaline type. The solute is sodium hydroxide (NaOH) or potassium hydroxide (KOH). Such a solute increases the ionic conductivity of the electrolyte and must be maintained within specified concentration ranges. For example, said solutes are preferably present in percentages ranging between 20% and 40% and more preferably between 25% and 35%. The solute does not take an active part in the electrolysis reaction, but preferably only serves to increase the ionic conductivity of the electrolyte.

The system 1 comprises at least one reaction chamber **2**, which, in particular, can consist of one or more fuel cells **20** or of an electrolyser **25.**

The fuel cell 20 is usually arranged in a plurality of stacked units. The stacked units are usually called fuel cell stacks or fuel stacks. In the present text, for the sake of simplicity, the fuel cell stack will simply be called fuel cell, also because the fuel cell 20 could be a single one.

The fuel cell 20 is adapted for reacting hydrogen (H₂) and oxygen (O₂) molecules, to produce water and electricity according to the phenomenon that takes place in a manner known per se in fuel cells.

In particular, the reaction involves oxidation at the anode:

2H₂ + 40H⁻ → 4H₂O + 4e⁻

reduction at the cathode:

O₂ + 2H₂O + 4e⁻ → 4OH⁻

and an overall reaction that leads to the result below:

2H₂ + O₂ → 2H₂O + electricity + heat.

The electricity obtained is then immediately usable for normal use.

Each fuel cell 20 comprises, in a known manner, two electrodes **21**, typically made of a dual-layer structure comprising an electrocatalytic layer, a hydrophobic layer and a porous matrix **22** that separates said electrodes and is adapted to contain the saturated electrolyte.

The said electrolyte, in the fuel cell 20, is preferably of the alkaline type, for example of the type previously described. It allows for the exchange of ions between the two electrodes 21 and therefore the implementation of the reactions described above.

The system 1 preferably also comprises an electrolyser **25,** i.e. a device per se known able to create oxygen (O₂) and hydrogen (H₂) molecules by hydrolysis of water molecules.

The electrolyser 25 thus performs a reaction opposite to that indicated above.

It comprises at least one electrolytic cell **26** and two electrodes **27** immersed in the electrolyte. The electrolyser 25 preferably comprises a plurality of electrolytic cells 26.

The electrolyte is preferably of the type previously described. It, in particular the solvent, i.e. water, is adapted to provide the raw material for the electrolysis reaction, i.e.:

2H₂O → 2H₂ + O₂

This reaction occurs, in a known manner, upon provision of electricity to the electrodes 27 and to obtain separation of oxygen (O₂) from hydrogen (H₂).

The solvent is then consumed on a continuous basis and the system comprises means for replenishing said solvent, which are not shown and are per se known.

The system 1 preferably further comprises at least one intermediate tank 4, in fluidic through connection with the reaction chamber 2, and in particular with the electrolyser 25; it is also preferably in fluidic through connection with the porous matrix 22 including the electrolyte present in the fuel cells 20.

The intermediate tank 4 is adapted to contain at least the electrolyte for the said reactions.

For example, in the electrolyser 25, the intermediate tank 4 consists of a so-called separation tank **40**, per se known.

The separation tank 40 comprises, in short, two separate, preferably substantially cylindrical, containers **41**, one for hydrogen and one for oxygen in the gaseous state. Said containers are in reciprocal fluidic through connection. Said connection is suitably present on the bottom of the containers. Moreover, in the containers 41, at least the connection, the inlet of the connection in the containers 41 and at least part of the containers 41 are occupied by a liquid head formed by the electrolyte. The portion occupied by the electrolyte is in turn in fluidic through connection with the electrolyte in the reaction chamber 2, and in particular in the electrolytic cell 26, and furthermore, it separates the gases (oxygen (O₂) and hydrogen (H₂)) present in the same containers.

In addition, a heat exchanger is preferably located between the tanks 41 and the reaction chamber 2, in particular the electrolyser 25, which is useful for the thermal conditioning of the circulating electrolyte.

The said containers 41 could also be in fluidic through connection with the porous matrix 22 of the fuel cells 20, or a simple tank including the electrolyte may be in connection with the same porous matrix 22.

Furthermore, the described fluidic through connections can conveniently be opened and closed on command by means of valves or the like.

The system 1 advantageously further comprises means **5** for measuring the solute concentration in the electrolyte present in the reaction chamber 2. These measuring means 5 preferably comprise a densimeter and/or a conductivity meter and/or an optical sensor, such as a refractometer. The latter is preferred because it avoids the problem of chemical resistance to the electrolyte of the materials constituting the sensor itself and since it does not need to be in contact with the substance to be able to perform the measurement.

The system 1 advantageously also comprises means **6** for solute replenishing in the electrolyte, functionally connected to the means 5 for measuring the concentration of the solute, and control means **7**, preferably of the electric or electronic type, such as a PLC, a computer or the like. The control means 7 are functionally connected to the replenishing means 6 and to the measuring means 5, which are consequently mutually functionally connected.

The means 6 for solute replenishing in the electrolyte comprise means **60** for pre-mixing in water the solute in the solid state, to provide a replenishing solution, and means **65** for introducing the replenishment solution into the reaction chamber 2. The pre-mixing means 60 comprise a mixing tank **61**, separate from the reaction chamber 2, and preferably a mixing device, for example of the mechanical type or the like.

The mixing tank 61 has a known volume and also the ratio between the volume of the mixing tank 61 and the volume occupied by the electrolyte in the whole system is known.

The pre-mixing means 60 may also comprise second measurement means **62** for measuring the solute concentration in the electrolyte present in the mixing tank 61, preferably of a type similar to the measurement means 5 as previously described. The pre-mixing means 60 further comprise a solute dispenser **63** designed to pour, and preferably also to measure, said solute inside the mixing tank 61.

The introduction means 65 may comprise a connecting duct, a valve for the closing or opening of said duct, and means for activating the flow, for example a pump or simply an appropriate gravitational positioning.

The introduction means 65 are in fluidic through connection with the mixing tank 61 and with the reaction chamber 2. The fluidic through connection with the latter preferably occurs through the intermediate tank 4. In fact, the introduction means 65 are preferably in fluidic through connection directly with the intermediate tank 4, and in particular with the electrolyte liquid head at the base of the containers 41.

The pre-mixing means 60 may also comprise a thermal conditioning system to reduce the temperature raised by the exothermic solute dissolution reactions which occur in the mixing tank 61. The thermal conditioning system may also be supplied with cooling fluid by the same conditioning system which supplies the heat exchanger between the tanks 41 and the reaction chamber 2.

The operation of the system 1, previously described in structural terms, is as follows. It defines a new procedure for adjusting the composition of an electrolyte. The system 1 is activated in a manner known per se, together with the fuel cells 20 and the electrolyser 25, which operate according to methods and processes per se known.

Thus, the fuel cell 20 produces electricity and water from hydrogen and oxygen present in the tanks 41, whereas, in contrast, the electrolyser 25 produces hydrogen and oxygen from water and electricity.

During operation of the reaction chamber 2, the concentration of the solute in the electrolyte can vary, in particular decrease.

For example, in the fuel cell 20, it can interact with other elements, such as the CO₂ present in the environment, and precipitate.

Instead, in the electrolyser 25, the solute can be dragged out from the chamber of the gases exiting the system.

In both cases, the solute may precipitate for other reasons.

During operation, the electrolyte present in the electrolyser 25 is also always in fluidic through connection with the intermediate tank 4 and continuously replenished to replace the solvent consumed in the electrolysis reaction.

During normal operation, a measuring step takes place for measuring the solute concentration in said electrolyte in the reaction chamber 2; such measurement is carried out on a continuous, and preferably periodical, basis. This measurement step is preferably carried out by means of the described measuring means 5.

The control means 7 continuously monitor the solute concentration, and if this falls below a predetermined threshold, an electrolyte replenishing step takes place, which is preferably implemented by the replenishing means 6. Therefore, the electrolyte is preferably always replenished in a thorough manner, thus with the whole spectrum of elements and in the ratios that make up the solution.

In particular, during the replenishing step, a calculation step can take place for calculating the amount of solute to be replenished and/or the solute concentration that the replenishing solution must have.

A pre-mixing step then occurs in which the amount of solute is measured by the dispenser 63 and introduced into the mixing tank 61, which is part of the pre-mixing means 60.

Or else, the amount of solute is measured also, or only, a *posteriori,* via the second measuring means 62 for measuring the solute concentration in the electrolyte present in the mixing tank 61.

The mechanical mixer homogenizes and creates the replenishing solution, obviously more concentrated than the electrolyte.

An introduction step then occurs in which the replenishing solution is introduced into the reaction chamber 2. This introduction step is preferably obtained via the introduction means 65 and through the intermediate tank 4 as previously described.

The replenishing solution, being liquid, is homogenised rapidly in the electrolyte and restores the ideal concentration thereof.

The procedure and the system 1 according to the invention achieve important advantages.

In fact, the Applicant has surprisingly found that the inaccuracies in the replenishment of the electrolytes of the known systems were due, in particular, to local concentration variations measured during dissolution of the solid solute in the electrolyte. Such dissolution was in fact too lengthy and with excessive local effects.

On the contrary, the use of a pre-mixed replenishment solution allows for obtaining a much higher replenishing speed in the electrolyte, up to two orders of magnitude higher. The efficiency of the fuel cell is therefore always kept at a maximum level. Moreover, for the vast majority of the process and of the time, the procedure 1 allows for the treatment of a solid solute which is much less chemically aggressive and more containable than the liquid electrolyte.

The system 1 is therefore simple and inexpensive in its implementation and management.

The invention is susceptible of variations falling within the scope of the inventive concept as defined by the claims.

For example, as is clear from the foregoing description, the fuel cells 20 may not involve a replenishment of the solute or may not have an electrolytic solution, such as for instance the fuel cells of the PEM type and many more.

In this context, all details are replaceable by equivalent elements and any type of materials, shapes and dimensions may be present.

## Claims

1. A procedure for adjusting the composition of an electrolyte in a system (1) comprising a fuel cell (20) adapted for reacting hydrogen (H₂) and oxygen (O₂) molecules, to produce water and electricity,
- said electrolyte being a solution having water as a solvent and NaOH or KOH as a solute,
- said system (1) comprising at least one reaction chamber (2) which uses said electrolyte,
- said reaction chamber (2) being an electrolyser (25), able to create oxygen (O₂) and hydrogen (H₂) molecules by hydrolysis of water molecules, or a fuel cell (20). adapted for reacting hydrogen (H₂) and oxygen (O₂) molecules, to produce water and electricity,
- said adjusting procedure comprising:
- a step of measuring the concentration of the solute in said electrolyte, and
- a pre-mixing in water of said solute in the solid state in a mixing tank separate from said reaction chamber (2), with consequent dissolution of said solute and provision of a replenishing solution,
- a subsequent introduction of said replenishment solution into said reaction chamber (2).

2. A procedure according to the preceding claim, wherein said introduction of said replenishment solution into said reaction chamber (2) is through the introduction of said replenishment solution into an intermediate tank (4), in fluidic through connection with said reaction chamber (2).

3. A procedure according to one or more of the preceding claims, wherein said solute replenishment step comprises the calculation of the amount of solute required.

4. A procedure according to one or more of the preceding claims, wherein said solute replenishment step comprises the measurement of the solute concentration in said replenishment solution.

5. A system (1) comprising a fuel cell (20) adapted for reacting hydrogen (H₂) and oxygen (O₂) molecules, to produce water and electricity and an electrolyte, consisting of a solution having water as a solvent and NaOH or KOH as a solute,
- said system (1) comprising:
- a reaction chamber (2), which uses said electrolyte,
- said reaction chamber (2) being an electrolyser (25), able to create oxygen (O₂) and hydrogen (H₂) molecules bv hydrolysis of water molecules, or a fuel cell (20), adapted for reacting hydrogen (H₂) and oxygen (O₂) molecules, to produce water and electricity,
- measuring means (5) for measuring the concentration of the solute in said electrolyte, and
- being **characterized in that** it comprises: replenishing means (6) for solute replenishment in said electrolyte, functionally connected to said measuring means (5) for measuring the concentration of the solute, comprising:
- pre-mixing means (60) for pre-mixing in water said solute in the solid state in a mixing tank (61) separate from said reaction chamber (2), with consequent dissolution of said solute and provision of a replenishing solution,
- introduction means (65) for introducing said replenishment solution into said reaction chamber (2).

6. A system according to the preceding claim, wherein said introduction means (65) are connectable, in fluidic through connection, with an intermediate tank (4), in fluidic through connection with said reaction chamber (2).

7. A system according to one or more of claims 5 and 6, wherein one of said reaction chambers (2) is an electrolyser (25).

8. A system according to one or more of claims 5-7, wherein said pre-mixing means (60) may further comprise a thermal conditioning system to reduce the temperature in said mixing tank (61).

## Patentansprüche

1. Einstellungsmethode der Elektrolytzusammensetzung für ein Brennstoffzellensystem (1), umfassend eine Brennstoffzelle (20), die geeignet ist, Wasserstoff- (H₂) und Sauerstoffmoleküle (O₂) reagieren zu lassen, um Wasser und Elektrizität zu erzeugen,
- wobei es sich bei dem genannten Elektrolyten um eine Lösung handelt, deren Lösungsmittel Wasser und deren gelösten Stoffe NaOH oder KOH sind,
- wobei das genannte Brennstoffzellensystem (1) mindestens eine Reaktionskammer (2) umfasst, die den genannten Elektrolyten verwendet,
- wobei es sich bei der genannten Reaktionskammer (2) um eine Elektrolysezelle (25) handelt, die geeignet ist, Sauerstoff- (O₂) und Wasserstoffmoleküle (H₂) durch Hydrolyse von Wassermolekülen zu erzeugen, oder um eine Brennstoffzelle (20), die geeignet ist, Wasserstoff- (H₂) und Sauerstoffmoleküle (O₂) reagieren zu lassen, um Wasser und Elektrizität zu erzeugen,
- wobei die genannte Einstellungsmethode Folgendes umfasst:
- einen Schritt der Messung der Konzentration des in dem genannten Elektrolyten gelösten Stoffes und
- eine Vormischung des genannten in festem Aggregatzustand in Wasser gelösten Stoffes in einem von der genannten Reaktionskammer (2) getrennten Mischbehälter mit anschließender Auflösung des genannten gelösten Stoffes und Herstellung einer Auffülllösung,
- ein anschließendes Einleiten der genannten Auffülllösung in die genannte Reaktionskammer (2).

2. Methode nach dem vorangegangenen Anspruch, bei der das genannte Einleiten der genannten Auffülllösung in die genannte Reaktionskammer (2) durch Einleiten der genannten Auffülllösung in einen strömungstechnisch mit der genannten Reaktionskammer (2) verbundenen Zwischenbehälter (4) erfolgt.

3. Methode nach einem oder mehreren der vorangegangenen Ansprüche, bei der der genannte Schritt des Auffüllens des gelösten Stoffes die Berechnung der Menge des notwendigen gelösten Stoffes umfasst.

4. Methode nach einem oder mehreren der vorangegangenen Ansprüche, bei der der genannte Schritt des Auffüllens des gelösten Stoffes die Messung der Konzentration des gelösten Stoffes in der genannten Auffülllösung umfasst.

5. Brennstoffzellensystem (1), umfassend eine Brennstoffzelle (20), die geeignet ist, Wasserstoff- (H₂) und Sauerstoffmoleküle (O₂) reagieren zu lassen, um Wasser und Elektrizität zu erzeugen, und einen aus einer Lösung bestehenden Elektrolyten, deren Lösungsmittel aus Wasser und deren gelöster Stoff aus NaOH oder KOH besteht,
- wobei das genannte Brennstoffzellensystem (1) Folgendes umfasst:
- eine Reaktionskammer (2), die den genannten Elektrolyten verwendet,
- wobei es sich bei der genannten Reaktionskammer (2) um eine Elektrolysezelle (25) handelt, die geeignet ist, Sauerstoff- (O₂) und Wasserstoffmoleküle (H₂) durch Hydrolyse von Wassermolekülen zu erzeugen, oder um eine Brennstoffzelle (20), die geeignet ist, Wasserstoff- (H₂) und Sauerstoffmoleküle (O₂) reagieren zu lassen, um Wasser und Elektrizität zu erzeugen,
- Vorrichtungen zum Messen (5) der Konzentration des in dem genannten Elektrolyten gelösten Stoffes und
- die **dadurch gekennzeichnet ist, dass** sie Folgendes umfasst: Vorrichtungen zum Auffüllen (6) des in dem genannten Elektrolyten gelösten Stoffes, die funktionell mit den genannten Vorrichtungen zum Messen (5) der Konzentration des gelösten Stoffes verbunden sind und Folgendes umfassen:
- Vorrichtungen zum Vormischen (60) des genannten in festem Aggregatzustand in Wasser gelösten Stoffes in einem von der genannten Reaktionskammer (2) getrennten Mischbehälter (61) mit anschließender Lösung des genannten gelösten Stoffes und Herstellung einer Auffülllösung,
- Vorrichtungen zum Einleiten (65) der genannten Auffülllösung in die genannte Reaktionskammer (2).

6. Brennstoffzellensystem nach dem vorangegangenen Anspruch, bei dem die genannten Vorrichtungen zum Einleiten (65) strömungstechnisch mit einem strömungstechnisch mit der genannten Reaktionskammer (2) verbundenen Zwischenbehälter (4) verbunden werden können.

7. Brennstoffzellensystem nach einem oder mehreren der Ansprüche 5 und 6, bei dem die genannte Reaktionskammer (2) eine Elektrolysezelle ist.

8. Brennstoffzellensystem nach einem oder mehreren der Ansprüche 5 bis 7, bei dem die genannten Vorrichtungen zum Vormischen (60) außerdem ein thermisches Aufbereitungssystem umfassen können, um die Temperatur in dem genannten Mischbehälter (61) zu verringern.

## Revendications

1. Procédé d'adaptation de la composition d'un électrolyte dans un système (1) comprenant une pile à combustible (20) en mesure de faire réagir des molécules d'hydrogène (H₂) et d'oxygène (O₂) pour produire de l'eau et de l'électricité,
- ledit électrolyte étant une solution avec de l'eau comme solvant et du NaOH ou KOH comme soluté,
- ledit système (1) comprenant au moins une chambre de réaction (2) utilisant ledit électrolyte,
- ladite chambre de réaction (2) étant un électrolyseur (25) en mesure de créer des molécules d'oxygène (O₂) et d'hydrogène (H₂) par hydrolyse des molécules d'eau ou une pile à combustible (20) en mesure de faire réagir des molécules d'hydrogène (H₂) et d'oxygène (O₂) pour produire de l'eau et de l'électricité,
- ledit procédé d'adaptation comprenant :
- une phase de mesure de la concentration de soluté dans ledit électrolyte, et
- un prémélange, dans un réservoir de mélange séparé de ladite chambre de réaction (2) dudit soluté à l'état solide dans l'eau, avec dissolution et production successives d'une solution de réintégration,
- une introduction suivante de ladite solution de réintégration dans la chambre de réaction (2).

2. Procédé selon la revendication précédente dans lequel l'introduction de ladite solution de réintégration dans la chambre de réaction (2) se fait en introduisant ladite solution de réintégration dans un réservoir intermédiaire (4) en connexion de passage fluide avec ladite chambre de réaction (2).

3. Procédé selon une ou plusieurs des revendications précédentes dans lequel ladite phase de réintégration du soluté comprend le calcul de la quantité nécessaire de soluté.

4. Procédé selon une ou plusieurs des revendications précédentes dans lequel les phases de réintégration de soluté comprennent la mesure de la concentration de soluté dans ladite solution de réintégration.

5. Système (1) comprenant une pile à combustible (20) en mesure de faire réagir des molécules d'hydrogène (H₂) et d'oxygène (O₂) pour produire de l'eau et de l'électricité, et un électrolyte, constitué par une solution ayant comme solvant de l'eau et comme soluté du NaOH o KOH,
- ledit système (1) comprenant :
- une chambre de réaction (2) utilisant ledit électrolyte,
- ladite chambre de réaction (2) étant un électrolyseur (25) en mesure de créer des molécules d'oxygène (O₂) et d'hydrogène (H₂) par hydrolyse des molécules d'eau, ou une pile à combustible (20) en mesure de faire réagir les molécules d'hydrogène (H₂) et d'oxygène (O₂) pour produire de l'eau et de l'électricité,
- des moyens de mesure (5) de la concentration de soluté dans ledit électrolyte,
- **étant caractérisé en ce qu'il** comprend : des moyens de réintégration (6) de soluté dans ledit électrolyte fonctionnellement liés aux moyens de mesure (5) de la concentration de soluté, comprenant :
- des moyens de prémélange (60) dans un réservoir de mélange (61) séparé de ladite chambre de réaction (2) dudit soluté à l'état solide dans l'eau, avec dissolution dudit soluté et production successives d'une solution de réintégration,
- des moyens d'introduction (65) de ladite solution de réintégration dans ladite chambre de réaction.

6. Système selon la revendication précédente dans lequel les moyens d'introduction (65) peuvent être connectés, en connexion de passage fluide, avec un réservoir intermédiaire (4) en connexion de passage fluide avec ladite chambre de réaction (2).

7. Système selon une ou plusieurs des revendications 5 et 6 dans lequel une chambre de réaction (2) est un électrolyseur (25).

8. Système selon une ou plusieurs des revendications 5-7 dans lequel lesdits moyens de prémélange (60) peuvent par ailleurs comprendre un système de conditionnement thermique afin de réduire la température dans ledit réservoir de mélange (61).
